# FASCICULE DE BREVET EUROPEEN

(11) **EP 0 713 820 B1**
(45) Date de publication et mention de la délivrance du brevet: **19.09.2001**
(21) Numéro de dépôt: 95402577.1
(22) Date de dépôt: 17.11.1995
(51) Int. Cl.: B62D 1/19, F16F 7/12

(54) **Dispositif d'absorption d'énergie d'une colonne de direction de véhicule automobile**
Energie-absorbierende Einrichtung für eine Kraftfahrzeuglenksäule
Energy absorbing device for a steering column of a motor vehicle

(30) Priorité: 24.11.1994 FR 9414044
(43) Date de publication de la demande: 29.05.1996
(73) Titulaire: NACAM FRANCE SA, 41100 Vendôme (FR)
(72) Inventeur: Daviau, Charles, F-41170 Sarge sur Braye (FR); Fargeas, Vincent, F-41100 Saint Ouen (FR)
(74) Mandataire: Cabinet Martinet & Lapoux

(56) Documents cités:
- EP-A- 0 502 761
- WO-A-93/04904
- AU-D- 2 995 577
- DE-A- 3 341 918
- GB-A- 1 195 864
- PATENT ABSTRACTS OF JAPAN vol. 009, no. 213 (M-408), 30 Août 1985 & JP-A-60 072614 (SHIN NIPPON SEITETSU KK), 24 Avril 1985,
- SAE JOURNAL, vol. 76, no. 7, NEW YORK US, pages 36-38, XP002000032 J. BANSHOYA, H. OKOSHI, S.ASANO, K. OKAMOTO: "ENERGY-ABSORBING STEERING COLUMN FOR SMALL CARS UTILIZES FRICTION AND PLASTIC DEFORMATION"

## Description

La présente invention est relative à un dispositif d'absorption d'énergie axiale d'une colonne de direction de véhicule automobile.

On connaît des dispositifs d'absorption d'énergie axiale de colonne de direction de véhicule automobile, qui font appel à l'utilisation d'éléments additionnels, tels que des systèmes de déclipsage. Ces types de dispositifs présentent l'inconvénient d'être relativement coûteux. D'autre part, il n'est pas toujours possible de les adapter sur des architectures de colonnes de direction existantes. Enfin, l'encombrement de ces systèmes ne permet pas de les installer lorsque la partie fixe de la colonne de direction se trouve en partie inférieure.

L'état de la technique comprend également le document SAE Journal, July 1968, Volume 76, n° 7, qui se rapporte à un dispositif d'absorption du type défini dans les préambules des revendications 1 et 2. Ce dispositif utilise un tube extérieur dans lequel sont agencés quatre colliers munis de fentes axiales. Un des colliers est serré et fixé sur la colonne avec deux goupilles cisaillables en cas de choc. Un autre collier est également serré sur la colonne, tandis que les deux autres colliers sont montés avec un léger jeu sur la colonne, qui possède une partie conique entre le collier fixé par goupilles et l'un des colliers avec jeu. Cet ensemble est complexe et coûteux.

Il y a aussi dans l'état de la technique, le document JP-A-60072614, qui est relatif à une méthode de déformation pour obtenir un tube d'oléoduc par courbure simultanée en continu. Cette méthode n'est pas adaptable à la réalisation d'une colonne de direction.

Le but de la présente invention est d'éviter les inconvénients ci-dessus, et de proposer un dispositif d'absorption d'énergie axiale qui réponde correctement à la courbe d'absorption d'énergie exigée en cas de choc, tout en s'adaptant facilement sur les colonnes de direction existantes.

Selon l'invention, le dispositif d'absorption d'énergie axiale d'une colonne de direction de véhicule automobile comporte les caractéristiques définies dans les revendications 1 et 2.

L'invention a également pour objet un procédé d'obtention du tube extérieur d'une colonne de direction selon l'invention, comportant les étapes principales suivantes :
- utilisation d'une ébauche, qui est constituée par une tôle ayant la forme voulue avec les empreintes, et dont l'épaisseur correspond à l'épaisseur du tube extérieur fini, l'ébauche comportant des languettes, qui sont aménagées le long des deux côtés de chaque extrémité, de manière que lors de la mise en forme définitive de l'ensemble du tube cylindrique, ces languettes pénètrent les unes dans les autres.
- mise en forme des deux zones latérales de l'ébauche, chacune de ces zones étant sensiblement égale au quart de la largeur de l'ébauche, c'est-à-dire au quart de la périphérie du tube extérieur fini ;
- mise en forme des deux zones latérales internes de l'ébauche, chacune de ces zones étant sensiblement égale au quart de la largeur de l'ébauche, c'est-à-dire au quart de la périphérie du tube extérieur fini, de manière à avoir deux demi-tubes cylindriques disposés côte à côte et reliés par la zone centrale ;
- mise en forme de la zone centrale tout en rapprochant l'un de l'autre les deux demi-tubes cylindriques pour réaliser sensiblement la forme du tube extérieur ;
- mise en forme définitive de l'ensemble du tube cylindrique, c'est-à-dire du tube extérieur, de manière à avoir les deux côtés de chaque extrémité qui sont jointifs l'un par rapport à l'autre.

Le dispositif d'absorption d'énergie axiale d'un système mécanique selon l'invention présente ainsi l'avantage de pouvoir s'adapter très facilement sur des architectures de colonnes de direction existantes, tout en offrant un système relativement peu coûteux, qui répond exactement à la courbe d'absorption d'énergie demandée en cas de choc.

D'autres caractéristiques et avantages de l'invention ressortiront de la description qui va suivre, donnée à titre d'exemple nullement limitatif, en référence aux dessins annexés sur lesquels :
- la figure 1 est une vue en perspective du dispositif d'absorption d'énergie axiale selon l'invention ;
- la figure 2 est une coupe transversale selon le plan II-II de la figure 1 ;
- la figure 3 est une coupe axiale suivant le plan III-III de la figure 2 ;
- la figure 4 est une coupe axiale d'une variante de réalisation ;
- la figure 4A est une coupe axiale partielle d'une autre variante de réalisation ;
- la figure 5 est une vue en coupe axiale du système de reprise de coupe selon l'invention ;
- la figure 6 est une coupe partielle de la figure 5 ;
- la figure 7 est une vue suivant le plan VII-VII de la figure 6 ;
- la figure 8 représente la courbe d'absorption d'énergie correspondant au mode de réalisation représenté sur la figure 1 ;
- la figure 9 représente la courbe d'absorption d'énergie correspondant aux modes de réalisation représenté sur les figures 4 et 4A ;
- la figure 10 représente en vue de dessus l'ébauche pour la réalisation du procédé d'obtention du tube extérieur selon l'invention ;
- la figure 11 est une vue de profil de l'ébauche de la figure 10 ;
- la figure 12 représente le profil obtenu après une première mise en forme ;
- la figure 13 représente le profil obtenu dans l'étape suivante à la figure 12 ;
- la figure 14 représente le profil obtenu dans l'étape suivante à la figure 13 ;
- la figure 15 représente le profil final du tube extérieur.

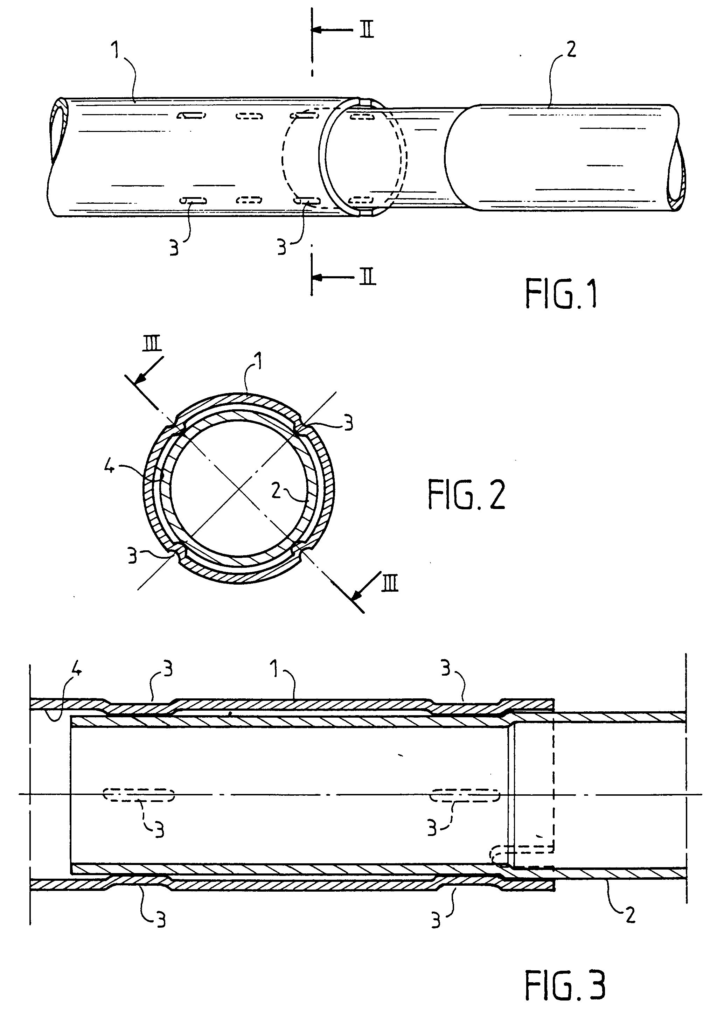

Comme on peut le voir sur les figures 1, 2, 3 et 4, le dispositif d'absorption d'énergie axiale d'un système mécanique selon l'invention comporte un ensemble télescopique ; cet ensemble télescopique est constitué par un tube intérieur 2, qui est monté dans un tube extérieur 1, de manière à pouvoir coulisser l'un dans l'autre. Selon une des caractéristiques essentielles de l'invention, des empreintes 3 sont aménagées sur l'un des tubes extérieur 1 ou intérieur 2, de manière à pouvoir coopérer avec la face du tube correspondant.

Les différentes caractéristiques des empreintes 3, ainsi que celles de la face du tube avec laquelle lesdites empreintes coopèrent sont choisies et adaptées les unes par rapport aux autres. Ce choix est fait de façon qu'en cas de choc axial, l'absorption d'énergie axiale s'effectue suivant la loi demandée, cette absorption d'énergie axiale étant donnée par l'interférence transversale en fonction du déplacement axial du tube intérieur 2 dans le tube extérieur 1.

Les différentes caractéristiques des empreintes 3 sur lesquelles on agit, afin d'obtenir la loi d'absorption d'énergie axiale demandée sont :
- le matériau,
- les caractéristiques de forme et dimensionnelles longitudinales et transversales.

De la même manière, les différentes caractéristiques de la face du tube coopérant avec les empreintes 3 sur lesquelles on peut agir, sont :
- le matériau,
- les caractéristiques de forme et dimensionnelles longitudinales et transversales.

Dans la réalisation de l'invention représentée sur les figures et qui correspond à l'application sur une colonne de direction de véhicule automobile, l'ensemble télescopique comporte un tube extérieur 1, et un tube intérieur 2, qui ont l'un et l'autre une section circulaire. Les empreintes 3 sont aménagées sur la face interne 4 du tube extérieur 1, et dans le cas de la réalisation représentée elles sont au nombre de huit. Ces empreintes 3 ont des caractéristiques de forme ainsi que des caractéristiques longitudinales et transversales, qui sont déterminées pour obtenir la loi d'absorption d'énergie axiale demandée.

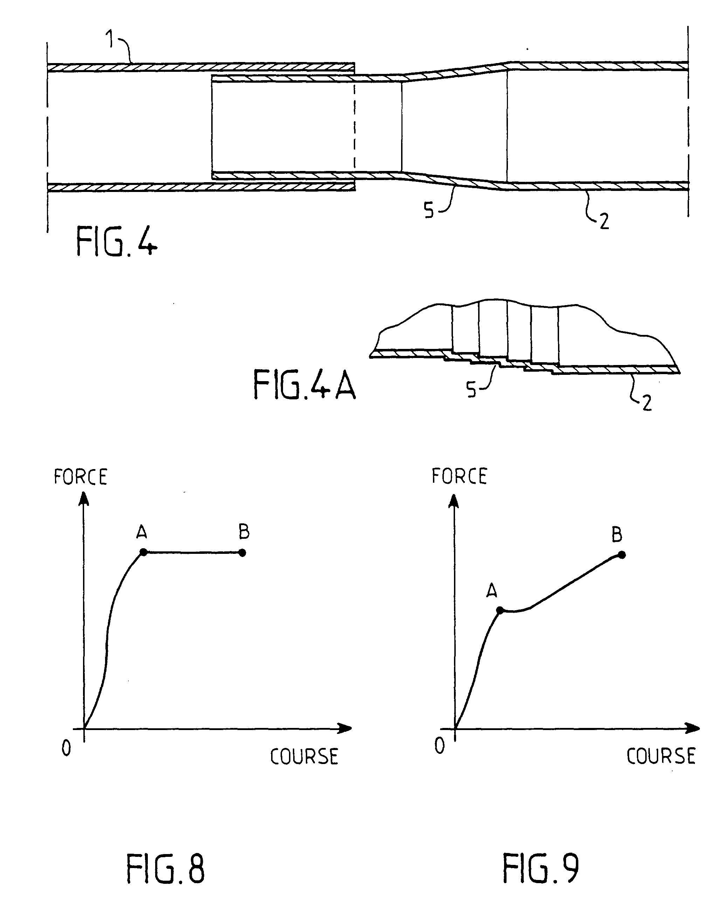

Dans la réalisation représentée sur la figure 4, l'ensemble télescopique comporte une partie cônique 5, qui est agencée sur le tube intérieur 2, et qui coopère avec la face interne 4 du tube extérieur 1. Selon une variante de réalisation de l'invention, cette partie cônique 5 peut être agencée sur le tube intérieur 2, de manière que ladite partie cônique 5 coopère avec le tube extérieur 1 dans la zone des empreintes 3.

Dans une autre réalisation de l'invention, qui est représentée sur la figure 4A, l'ensemble télescopique comporte une partie étagée, qui est agencée sur le tube intérieur 2, et qui coopère avec la face interne 4 du tube extérieur 1.

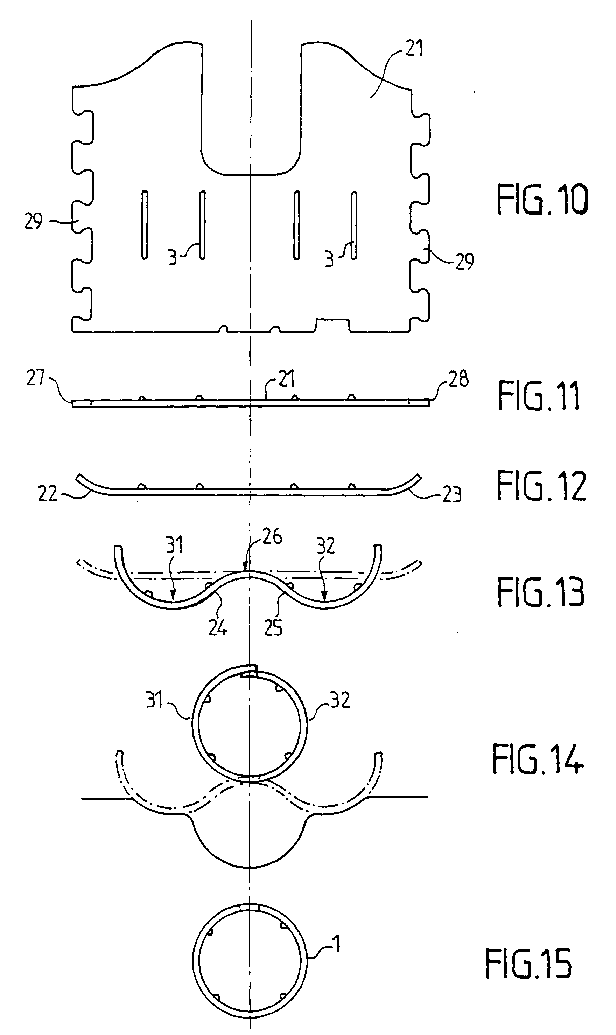

La fonction de ce système est de permettre un guidage axial du tube intérieur 1 par rapport au tube extérieur 2 avec un certain niveau d'effort. L'effort est obtenu grâce à l'interférence entre les deux tubes intérieur 2 et extérieur 1 dans la zone des empreintes 3 du tube extérieur 2. On obtient ainsi, comme cela est représenté sur la figure 8, une courbe de l'effort en fonction de la course qui comporte deux parties : un effort de démarrage avec une mise en mouvement faible qui est la partie OA, puis un maximum d'absorption d'énergie sur une course donnée dans la partie AB.

Le système d'une partie cônique aménagée sur le tube extérieur 2, ou d'une partie étagée, augmente l'interférence du tube extérieur 2 par rapport au tube intérieur 1, ce qui engendre une courbe d'effort croissante en fonction de la course, comme on peut le voir sur la figure 9. En effet, dans le cas du mode de réalisation avec une partie cônique ou étagée, il y a une première partie de la courbe OA avec un effort de démarrage pour une mise en mouvement faible, suivie d'une absorption d'énergie maximum sur une course donnée dans la partie de la courbe AB, avec une augmentation de l'effort du point A au point B.

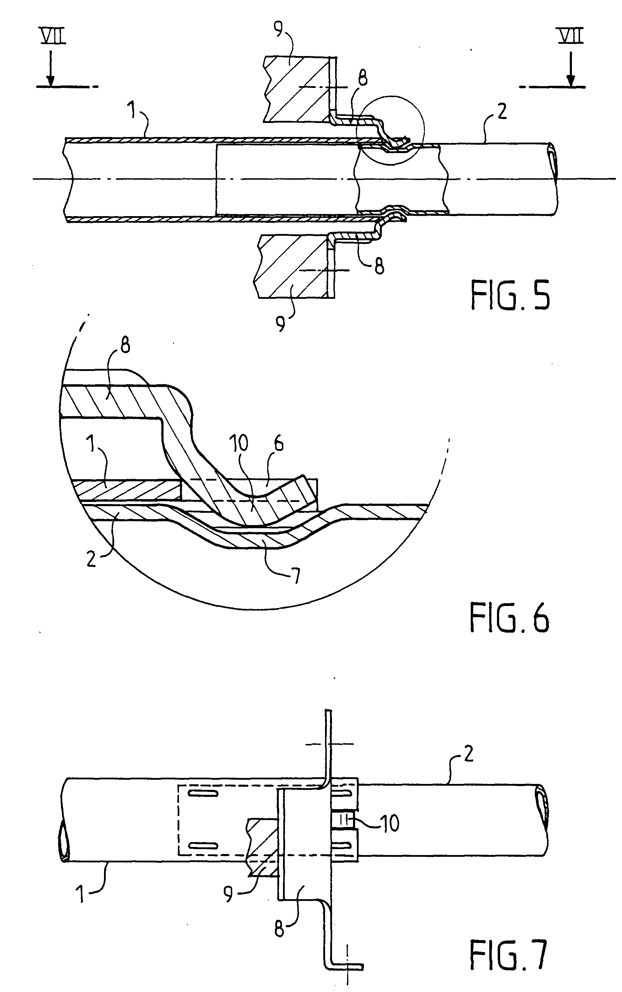

A ce système d'absorption d'énergie, est combiné un système de reprise du couple de rotation du tube intérieur 2. Ce système de reprise du couple de rotation est constitué par un système de tenue dudit tube intérieur 2, qui est agencé de manière à cesser d'agir en cas de choc axial. Dans le mode de réalisation représenté sur les figures 5 à 7, ce système de tenue du tube intérieur 2 comporte deux pattes 8 qui sont liées à un élément fixe 9. Chacune desdites pattes 8 a son extrémité libre 10, qui traverse une lumière 6, qui est aménagée dans le tube extérieur fixe 1. Puis, chacune de ces pattes 8 a son extrémité 10 qui s'engage dans une empreinte 7, qui est aménagée dans le tube intérieur 2 mobile. Les pattes 8 ou ergots sont conçues de manière à pouvoir s'écarter en cas de choc frontal afin d'autoriser la translation du tube intérieur 2 mobile par rapport au tube extérieur 1 fixe.

L'intérêt de l'ensemble du dispositif selon l'invention est de passer la norme européenne ECE 18 de choc frontal, et la norme européenne ECE 12 de système anti-vol, tout en permettant de s'adapter à l'architecture particulière de la partie inférieure de la colonne fixe.

Dans le cas où le tube extérieur 1 est constitué par un tube roulé et agrafé ou par un tube roulé et soudé, le procédé d'obtention de ce tube extérieur 1 selon l'invention est représenté sur les figures 10 à 15.

Le procédé d'obtention du tube extérieur 1 comporte les étapes principales suivantes :
- utilisation d'une ébauche 21 comme représenté sur les figures 10 et 11 ;
- mise en forme des deux zones latérales 22 et 23 comme cela est représenté sur la figure 12 ;
- mise en forme des deux zones latérales internes 24 et 25, comme cela est représenté sur la figure 13 ;
- mise en forme de la zone centrale 26 comme cela est représenté sur la figure 14 ;
- mise en forme définitive de l'ensemble des tubes cylindriques comme cela est représenté sur la figure 15.

L'ébauche 21 représentée sur les figures 10 et 11, est constituée par une tôle qui a la forme voulue avec les empreintes 3, et dont l'épaisseur correspond à l'épaisseur du tube extérieur 1 fini.

L'étape suivante, représentée sur la figure 12, consiste dans la mise en forme des deux zones latérales 22 et 23 de l'ébauche 21. Chacune de ces zones 22 et 23 est sensiblement égale au quart de la largeur de l'ébauche 21, c'est-à-dire au quart de la périphérie du tube extérieur 1 fini.

L'étape suivante consiste en la mise en forme des deux zones latérales internes 24 et 25 de l'ébauche 1 comme cela est représenté sur la figure 13. Chacune de ces zones 24 et 25 est sensiblement égale au quart de la largeur de l'ébauche 21, c'est-à-dire au quart de la périphérie du tube extérieur 1 fini ; de manière à avoir deux demi-tubes cylindriques 31 et 32, qui sont disposés côte à côte et qui sont reliés par la zone centrale 26.

L'étape suivante représentée sur la figure 14, consiste en la mise en forme de la zone centrale 26, tout en rapprochant l'un de l'autre les deux demi-tubes cylindriques 31 et 32, afin de réaliser sensiblement la forme du tube extérieur fini 1.

L'étape suivante représentée sur la figure 15 consiste en la mise en forme définitive de l'ensemble du tube cylindrique, c'est-à-dire du tube extérieur 1, de manière à avoir les deux côtés 27 et 28 de chaque extrémité qui sont jointifs l'un par rapport à l'autre.

L'ébauche 21 comporte des languettes 29 qui sont aménagées le long des deux côtés 27 et 28 de chaque extrémité, comme cela est représenté sur la figure 10. Ainsi, lors de la mise en forme définitive de l'ensemble du tube cylindrique, ces languettes 29 pénètrent les unes dans les autres.

## Revendications

1. Dispositif d'absorption d'énergie axiale d'une colonne de direction de véhicule automobile comportant:
- un ensemble télescopique constitué par un tube intérieur (2) de section circulaire monté dans un tube extérieur (1) de section circulaire de manière à pouvoir coulisser l'un dans l'autre,
- des empreintes (3) qui sont aménagées sur la face interne (4) du tube extérieur (1),
- le tube intérieur (2) comportant une partie conique, qui est agencée de manière que ladite partie conique coopère avec la face interne (4) du tube extérieur (1) dans la zone des empreintes (3),
**caractérisé en ce que** :
- le tube extérieur (1) est roulé et agrafé;
- le matériau et les différentes caractéristiques de forme et dimensionnelles longitudinales et transversales des empreintes (3) et de la face du tube intérieur (2) avec laquelle lesdites empreintes (3) coopèrent, sont choisies et adaptées les unes par rapport aux autres, de façon qu'en cas de choc axial, l'absorption d'énergie axiale s'effectue suivant la loi demandée, donnée par l'interférence transversale en fonction du déplacement axial du tube intérieur (2) dans le tube extérieur (1) ;
- l'ensemble téléscopique comporte un système de reprise du couple de rotation du tube intérieur (2) constitué par un système de tenue dudit tube intérieur (2), qui est agencé de manière à cesser d'agir en cas de choc axial ;
- le système de tenue du tube intérieur (2) comporte au moins une patte (8) liée à un élément fixe (9), ladite patte (8) ayant son extrémité (10) libre qui traverse une lumière (6) aménagée dans le tube extérieur (1) fixe, et qui s'engage dans une empreinte (7) aménagée dans le tube intérieur (2) mobile.

2. Dispositif d'absorption d'énergie axiale d'une colonne de direction de véhicule automobile comportant:
- un ensemble télescopique constitué par un tube intérieur (2) de section circulaire monté dans un tube extérieur (1) de section circulaire de manière à pouvoir coulisser l'un dans l'autre,
- des empreintes (3) qui sont aménagées sur la face interne (4) du tube extérieur (1),
**caractérisé en ce que** :
- le tube extérieur est roulé et agrafé;
- le tube intérieur (2) comporte une partie étagée, qui est agencée de manière que ladite partie étagée coopère avec la face interne (4) du tube extérieur (1) dans la zone des empreintes (3),
- le matériau et les différentes caractéristiques de forme et dimensionnelles longitudinales et transversales des empreintes (3) et de la face du tube intérieur (2) avec laquelle lesdites empreintes (3) coopèrent, sont choisies et adaptées les unes par rapport aux autres, de façon qu'en cas de choc axial, l'absorption d'énergie axiale s'effectue suivant la loi demandée, donnée par l'interférence transversale en fonction du déplacement axial du tube intérieur (2) dans le tube extérieur (1) ;
- l'ensemble télescopique comporte un système de reprise du couple de rotation du tube intérieur (2) constitué par un système de tenue dudit tube intérieur (2), qui est agencé de manière à cesser d'agir en cas de choc axial ;
- le système de tenue du tube intérieur (2) comportant au moins une patte (8) liée à un élément fixe (9), ladite patte (8) ayant son extrémité (10) libre qui traverse une lumière (6) aménagée dans le tube extérieur (1) fixe, et qui s'engage dans une empreinte (7) aménagée dans le tube intérieur (2) mobile.

3. Procédé d'obtention du tube extérieur (1) d'une colonne de direction de véhicule automobile selon l'une quelconque des revendications précédentes, **caractérisé en ce que** ledit procédé comporte les étapes principales suivantes :
- utilisation d'une ébauche (21) constituée par une tôle ayant la forme voulue avec les empreintes (3), et dont l'épaisseur correspond à l'épaisseur du tube extérieur (1) fini, l'ébauche (21) comportant des languettes (29) aménagées le long des deux côtés (27, 28) de chaque extrémité, de manière que lors de la mise en forme définitive de l'ensemble du tube cylindrique, lesdites languettes (29) pénètrent les unes dans les autres;
- mise en forme des deux zones latérales (22, 23) de l'ébauche (21), chaque zone (22, 23) étant sensiblement égale au quart de la largeur de l'ébauche (21), c'est-à-dire au quart de la périphérie du tube extérieur (1) fini ;
- mise en forme des deux zones latérales internes (24, 25) de l'ébauche (21), chaque zone (24, 25) étant sensiblement égale au quart de la largeur de i'ébauche (21), c'est-à-dire au quart de la périphérie du tube extérieur (1) fini, de manière à avoir deux demi-tubes cylindriques (31, 32) disposés côte à côte et reliés par la zone centrale (26) ;
- mise en forme de la zone centrale (26) tout en rapprochant l'un de l'autre les deux demi-tubes cylindriques (31, 32) pour réaliser sensiblement la forme du tube extérieur (1) ;
- mise en forme définitive de l'ensemble du tube sylindrique, c'est-à-dire du tube extérieur (1), de manière à avoir les deux côtés (27, 28) de chaque extrémité jointifs l'un par rapport à l'autre, les languettes (29) pénétrant les unes dans les autres.

## Patentansprüche

1. Einrichtung zur Absorption axialer Energie einer Kraftfahrzeuglenksäule, umfassend:
- eine ausziehbare Einheit, bestehend aus einem Innenrohr (2) mit kreisförmigem Querschnitt, das in einem Außenrohr (1) mit kreisförmigem Querschnitt derart angebracht ist, dass das eine im anderen gleiten kann,
- Eindrückungen (3), die auf der Innenseite (4) des Außenrohres (1) angeordnet sind,
- wobei das Innenrohr (2) einen konischen Bereich aufweist, der derart ausgebildet ist, dass der genannte konische Bereich mit der Innenseite (4) des Außenrohrs (1) im Bereich der Eindrückungen (3) zusammenarbeitet,
**dadurch gekennzeichnet, dass** :
- das Außenrohr (1) gerollt und verklammert ist,
- das Material und die verschiedenen Merkmale der Form und der Längs- und Querabmessungen der Eindrückungen (3) und der Seite des Innenrohres (2), mit der die genannten Eindrückungen (3) zusammenarbeiten, derart ausgewählt und aneinander angepasst sind, dass die Absorption axialer Energie im Fall eines axialen Stoßes nach dem verlangten Gesetz erfolgt, das durch die Querwechselwirkung in Abhängigkeit von der axialen Verschiebung des Innenrohres (2) im Außenrohr (1 ) gegeben ist,
- die ausziehbare Einheit ein System zur Aufnahme des Drehmoments des Innenrohres (2) aufweist, das aus einem System zum Halten des genannten Innenrohres (2) besteht, das derart ausgebildet ist, dass es im Fall eines axialen Stoßes aufhört, zu arbeiten,
- das System zum Halten des Innenrohres (2) mindestens eine Klammer (8) aufweist, die an einem festen Teil (9) befestigt ist, wobei die genannte Klammer (8) über ein freies Ende (10) verfügt, das eine Öffnung (6) durchquert, die im feststehenden Außenrohr (1) ausgebildet ist, und in eine Eindrückung (7) eingreift, die im beweglichen Innenrohr (2) ausgebildet ist.

2. Einrichtung zur Absorption axialer Energie einer Kraftfahrzeuglenksäule, umfassend:
- eine ausziehbare Einheit, bestehend aus einem Innenrohr (2) mit kreisförmigem Querschnitt, das in einem Außenrohr (1) mit kreisförmigem Querschnitt derart angebracht ist, dass das eine im anderen gleiten kann,
- Eindrückungen (3), die auf der Innenseite (4) des Außenrohres (1) angeordnet sind,
**dadurch gekennzeichnet, dass** :
- das Außenrohr gerollt und verklammert ist,
- das Innenrohr (2) einen gestuften Bereich aufweist, der derart ausgebildet ist, dass der genannte gestufte Bereich mit der Innenseite (4) des Außenrohrs (1) im Bereich der Eindrückungen (3) zusammenarbeitet,
- das Material und die verschiedenen Merkmale der Form und der Längs- und Querabmessungen der Eindrückungen (3) und der Seite des Innenrohres (2), mit der die genannten Eindrückungen (3) zusammenarbeiten, derart ausgewählt und aneinander angepasst sind, dass die Absorption axialer Energie im Fall eines axialen Stoßes nach dem verlangten Gesetz erfolgt, das durch die Querwechselwirkung in Abhängigkeit von der axialen Verschiebung des Innenrohres (2) im Außenrohr (1) gegeben ist,
- die ausziehbare Einheit ein System zur Aufnahme des Drehmoments des Innenrohres (2) aufweist, das aus einem System zum Halten des genannten Innenrohres (2) besteht, das derart ausgebildet ist, dass es im Fall eines axialen Stoßes aufhört, zu arbeiten,
- das System zum Halten des Innenrohres (2) mindestens eine Klammer (8) aufweist, die an einem festen Teil (9) befestigt ist, wobei die genannte Klammer (8) über ein freies Ende (10) verfügt, das eine Öffnung (6) durchquert, die im feststehenden Außenrohr (1) ausgebildet ist, und in eine Eindrückung (7) eingreift, die im beweglichen Innenrohr (2) ausgebildet ist.

3. Verfahren zur Herstellung des Außenrohres (1) einer Kraftfahrzeuglenksäule nach irgendeinem der vorangehenden Patentansprüche, **dadurch gekennzeichnet, dass** das genannte Verfahren die folgenden Hauptschritte aufweist:
- Verwendung eines Rohlings (21), bestehend aus einem Blech mit der gewünschten Form mit den Eindrückungen (3), dessen Dicke der Dicke des fertigen Außenrohres (1) entspricht, wobei der Rohling (21) Zungen (29) aufweist, die längs den beiden Seiten (27, 28) jedes Endes ausgebildet sind, derart, dass bei der Ausbildung der endgültigen Form des gesamten zylindrischen Rohres die genannten Zungen (29) ineinander eindringen;
- Formung der beiden Seitenbereiche (22, 23) des Rohlings (21), wobei jeder Bereich (22, 23) im wesentlichen einem Viertel der Breite des Rohlings (21) gleich ist, d.h. dem Viertel des Umfangs des fertigen Außenrohres (1);
- Formung der beiden inneren Seitenbereiche (24, 25) des Rohlings (21), wobei jeder Bereich (24, 25) im wesentlichen einem Viertel der Breite des Rohlings (21) gleich ist, d.h. dem Viertel des Umfangs des fertigen Außenrohres (1), um zwei zylindrische Halbrohre (31, 32) zu erhalten, die Seite an Seite angeordnet sind und durch den zentralen Bereich (26) verbunden sind;
- Formung des zentralen Bereiches (26) unter Annäherung der beiden zylindrischen Halbrohre (31, 32) aneinander, um im wesentlichen die Form des Außenrohres (1) zu erhalten;
- endgültige Formung des ganzen zylindrischen Rohres, d.h. des Außenrohres (1), derart, dass die beiden Seiten (27, 28) jedes Endes aneinander liegen, wobei die Zungen (25) ineinander eindringen.

## Claims

1. A device for absorbing axial energy from a motor vehicle steering column, comprising:
- a telescopic assembly comprising a circular-section inner tube (2) mounted in a circular-section outer tube (1) so as to be slidable in one another,
- indentations (3) formed on the inner surface (4) of the outer tube (1),
- the inner tube (2) comprising a conical part designed so that the conical part co-operates with the inner surface (4) of the outer tube (1) in the zone of the indentations (3),
**characterised in that**:
- the outer tube (1) is rolled and joined by folded seams;
- the material and the various shape and longitudinal and transverse dimensional characteristics of the indentations (3) and of the surface of the inner tube (2) with which the said indentations (3) co-operate, are chosen and adapted to one another so that in the event of an axial impact, the absorption of axial energy is effected at the required rate, determined by transverse interference depending on the axial movement of the inner tube (2) in the outer tube (1);
- the telescopic assembly comprises a system for absorbing the torque of the inner tube (2), comprising a system for holding the said inner tube (2) disposed so as to stop acting in the event of an axial impact;
- the system for holding the inner tube (2) comprises at least one lug (6) connected to a fixed element (9), the free end (10) of the lug (8) extending through an aperture (6) formed in the fixed outer tube (1) and engaging in an indentation (7) formed in the movable inner tube (2).

2. A device for absorbing axial energy from a motor vehicle steering column comprising:
- a telescopic assembly comprising a circular-section inner tube (2) mounted in a circular-section outer tube (1) so as to be slidable in one another,
- indentations (3) formed on the inner surface (4) of the outer tube (1),
**characterised in that**:
- the outer tube is rolled and joined by a folded seam;
- the inner tube (2) comprises a stepped part designed so that the said stepped part co-operates with the inner surface (4) of the outer tube (1) in the zone of the indentations (3);
- the material and the various shape and longitudinal and transverse dimensional characteristics of the indentations (3) and of the surface of the inner tube (2) with which the said indentations (3) co-operate, are chosen and adapted to one another so that in the event of an axial impact, the absorption of axial energy is effected at the required rate, determined by transverse interference depending on the axial movement of the inner tube (2) in the outer tube (1) ;
- the telescopic assembly comprises a system for absorbing the torque of the inner tube (2), comprising a system for holding the said inner tube (2) disposed so as to stop acting in the event of an axial impact;
- the system for holding the inner tube (2) comprises at least one lug (6) connected to a fixed element (9), the free end (10) of the lug (8) extending through an aperture (6) formed in the fixed outer tube (1) and engaging in an indentation (7) formed in the movable inner tube (2).

3. A method of obtaining the outer tube (1) of a motor vehicle steering column according to any of the preceding claims, **characterised in that** the said method comprises the following main steps:
- use of a blank (21) comprising a metal sheet having the desired form with the indentations (3) and a thickness corresponding to the thickness of the finished outer tube (1), the blank (21) comprising tongues (29) formed along the two sides (27, 28) of each end, so that when the cylindrical tube assembly is given its final shape, the tongues (29) extend into one another;
- shaping the two side zones (22, 23) of the blank (21), each zone (22, 23) being substantially equal to a quarter of the length of the blank (21), i.e. to a quarter of the periphery of the finished outer tube (1);
- shaping the two inner side zones (24, 25) of the blank (21), each zone (24, 25) being substantially equal to a quarter of the width of the blank (21), i.e. to a quarter of the periphery of the finished outer tube (1), so as to have two cylindrical half-tubes (31, 32) disposed side by side and connected by the central zone (26);
- shaping the central zone (26) by bringing the two cylindrical half-tubes (31, 32) together in order substantially to obtain the shape of the outer tube (1), and
- final shaping of the cylindrical tube assembly, i.e. the outer tube (1), so as to have the two sides (27, 28) of each end contiguous with one another, the tongues (29) extending into one another.
